# EUROPÄISCHE PATENTSCHRIFT

(11) **EP 2 936 088 B1**
(45) Veröffentlichungstag und Bekanntmachung des Hinweises auf die Patenterteilung: **02.11.2016**
(21) Anmeldenummer: 13814037.1
(22) Anmeldetag: 02.12.2013
(51) Int. Cl.: G01G 21/26, B25B 9/02

(54) **HANDHABUNGSWERKZEUG FÜR PRÜFGEWICHTE UND GEWICHTSKASTEN**
TOOL AND BOX FOR CALIBRATION WEIGHTS
OUTIL ET CAISSE POUR POIDS DE CALIBRATION

(30) Priorität: 18.12.2012 DE 102012112508
(43) Veröffentlichungstag der Anmeldung: 28.10.2015
(73) Patentinhaber: Sartorius Lab Instruments GmbH & Co. KG, 37079 Göttingen (DE)
(72) Erfinder: OSANG, Steffen, 37085 Göttingen (DE); WEIDNER, Christian, 37242 Bad Sooden-Allendorf (DE)
(86) Internationale Anmeldenummer: PCT/EP2013/003633
(87) Internationale Veröffentlichungsnummer: WO 2014/094976

(56) Entgegenhaltungen:
- DE-A1- 10 032 398
- JP-A- 2008 188 704
- JP-A- 2012 185 056

## Beschreibung

Die Erfindung betrifft ein Handhabungswerkzeug für das Handling von Prüfgewichten in Knopfform sowie einen Gewichtskasten bestehend aus einem Satz von Prüfgewichten in Knopfform und einem Handhabungswerkzeug.

Prüfgewichte sind Gewichte, die zum Beispiel bei Eichbehörden oder bei entsprechend zertifizierten Firmen als Referenzgewichte verwendet werden, um Waagen, insbesondere Präzisionswaagen zu überprüfen oder um andere Gewichte niedrigerer Genauigkeitsklassen zu kalibrieren.

Die Erfindung bezieht sich auf Prüfgewichte in Knopfform, insbesondere solche, die in der internationalen Norm OIML R111-1 Edition 2004 dargestellt sind. Die OIML ist die internationale Organisation für das gesetzliche Messwesen. In der OIML R111 sind unter anderem Form und Größe von Prüfgewichten geregelt. Die vorliegende Erfindung soll sich jedoch nicht zwingend nur auf die darin geregelten Formen und Größen von Prüfgewichten beschränken.

Die Genauigkeit eines Gewichts wird über sogenannte Genauigkeitsklassen definiert. Diese Genauigkeitsklassen bestimmen die jeweils zulässigen Fertigungstoleranzen. Die Genauigkeitsklassen stufen sich hierarchisch ab, wobei die Klasse E1 die genaueste und die Klasse M3 die am wenigsten genaue Gewichtsklasse ist. Beim Prüfen von Gewichten untereinander ist immer die nächsthöhere Genauigkeitsklasse maßgebend, das heißt ein Gewicht wird an ein Gewicht einer höheren Genauigkeitsklasse angeschlossen und damit verglichen. Basis hierfür ist der internationale Kilogrammprototyp, das sogenannte Urkilogramm. Dieses repräsentiert die Maßeinheit Masse. Es besteht aus einem Platin-Iridium-Zylinder und wird im BIPM nahe Paris aufbewahrt. An das Urkilogramm sind über verschiedene Kopien die nationalen Gewichtsnormale und hieran letztlich Gewichte der Genauigkeitsklasse E1 angeschlossen, die wiederum die Basis für den Anschluss von Gewichten niedrigerer Genauigkeitsklassen darstellen.

Prüfgewichte müssen äußerst sorgfältig aufbewahrt und gehandhabt werden. Ein Prüfgewicht wird beispielsweise nicht mit der Hand angefasst oder berührt, da dies zwangsläufig Ablagerungen am Prüfgewicht zur Folge hätte, was wiederum zu einer Oxidation an der Oberfläche des Prüfgewichts führen könnte und damit natürlich zu einer Gewichtswertänderung. Selbst Staubpartikel dürfen an einem solchen Prüfgewicht nicht haften.

Es gibt verschiedene sogenannte Gewichtssätze mit Prüfgewichten unterschiedlicher Staffelung, beispielsweise 1, 2, 5, 10, 20, 50, 100, 200 Gramm. Darüber hinaus ist ein üblicher Gewichtssatz, mit dem Waagen geprüft werden, ein Satz mit Prüfgewichten von 500 Gramm, 1 Kilogramm, 2 Kilogramm und 5 Kilogramm.

Während die Gewichtssätze bis 200 Gramm eine Handhabung der Prüfgewichte mittels Pinzette ermöglichen, ist dies bei einem Gewichtssatz mit einem Prüfgewicht ab 500 Gramm nicht mehr möglich. Zu diesem Zweck sind für einen Gewichtskasten, der beispielsweise einen Gewichtssatz mit den Prüfgewichten 500 Gramm, 1 Kilogramm, 2 Kilogramm und 5 Kilogramm enthält, entsprechende Handhabungshilfen jeweils exakt für die einzelnen Prüfgewichte abgestimmt erhältlich. Mit diesen Hilfen werden Prüfgewichte in Knopfform im Halsbereich des Gewichts aufgenommen und gehandhabt. Solche Gewichtsgabeln sind bei den Firmen Häfner Gewichte GmbH, Kern & Sohn GmbH und Zwiesel SAS erhältlich. Ferner ist eine solche Gewichtsgabel in der DE 103 49 914 A1 gezeigt.

Aufgabe der Erfindung ist es, ein verbessertes Handhabungswerkzeug für das Handling von Prüfgewichten in Knopfform zu schaffen, welches auch beim Herstellungsaufwand gegenüber dem Stand der Technik optimierbar ist.

Die Aufgabe wird durch ein Handhabungswerkzeug für Prüfgewichte in Knopfform gelöst, mit einer Gewichtsgabel mit zwei, unterschiedliche Nennweiten aufweisenden Gabelenden und wenigstens zwei Adaptern, die jeweils einem der Gabelenden zugeordnet sind, wobei ein Gabelende zur Aufnahme eines zugeordneten Prüfgewichts in Knopfform eines ersten Nennwertes und das andere Gabelende zur Aufnahme eines zugeordneten Prüfgewichts in Knopfform eines zweiten Nennwerts ausgebildet ist und wobei jeder Adapter an dem ihm zugeordneten Gabelende befestigbar ist, wobei die mit den Adaptern versehenen Gabelenden eine geringere, eigene Nennweite haben, um ein Prüfgewicht in Knopfform eines dritten und vierten Nennwertes aufzunehmen.

Das erfindungsgemäße Handhabungswerkzeug sieht im Gegensatz zum Stand der Technik nur ein Handhabungswerkzeug vor, mit dem zumindest vier unterschiedliche Prüfgewichte, das heißt Prüfgewichte mit vier unterschiedlichen Nennwerten in maßgeschneiderten, individuellen Gabelenden aufgenommen werden können, wobei jeweils zwei Prüfgewichte durch die Gabelenden selbst aufgenommen werden können und zwei durch die zumindest zwei zusätzlichen, aufsetzbaren Adapter. Die erfindungsgemäße Lösung mit einem Handhabungswerkzeug, das nur eine Gewichtsgabel für mindestens vier Prüfgewichte erfordert, hat den weiteren großen Vorteil, dass der Benutzer immer nur mit demselben Werkzeug arbeitet und nicht unterschiedlich große Gewichtsgabeln, wie im Stand der Technik, benutzen muss. Da die Prüfgewichte enorm sorgsam gehandhabt werden müssen, keinesfalls beispielsweise herabfallen dürfen, stellt die Handhabung eines kompletten Werkzeugsatzes gemäß Stand der Technik höhere Anforderungen an die Erfahrung des Benutzers dar, als dies beim erfindungsgemäßen Handhabungswerkzeug der Fall ist. Beim erfindungsgemäßen Handhabungswerkzeug arbeitet der Benutzer stets im Wesentlichen mit dem gleichen Werkzeug. Durch den jeweiligen Adapter wird die Nennweite zwischen den Gabelenden zusätzlich verringert, sodass das mit Adapter versehene Gabelende für ein anderes Prüfgewicht einsetzbar ist.

Die Gabelenden und/oder die Adapter sind im Wesentlichen U-förmig und haben eine tellerrandförmige Vertiefung, die vorzugsweise komplementär zu der Knopfform des zugeordneten, zu handhabenden Prüfgewichts ist, das heißt zum Auflagebereich des Knopfes am Werkzeug.

Bei flachen oder bis zur Spitze der Gabelzinken gleichmäßig verlaufenden Gabelenden besteht die Gefahr, dass die Prüfgewichte aus der Gabel herausgleiten. Durch die tellerrandförmigen Vertiefungen jedoch gibt es eine Art Formschluss zwischen Prüfgewicht und Gabelende, sodass ein Herausgleiten der Prüfgewichte aus dem jeweiligen Gabelende und aus dem Adapter verhindert wird.

Die Vertiefungen können als unterbrochener Ring ausgebildet werden und vor den Gabelenden enden. Das bedeutet, im Bereich der Gabelenden ergibt sich eine Erhöhung am Gabelende und am zugeordneten Adapter, der das Herausgleiten eines Prüfgewichts aus dem Handhabungswerkzeug verhindert.

Die Adapter können formschlüssig an den Gabelenden befestigt sein, vorzugsweise formschlüssig in die Gabelenden eingreifen.

Eine Möglichkeit der Befestigung der Adapter an den Gabelenden besteht darin, über wenigstens einen angeformten Positionierstift, der am Adapter und/oder am Gabelende angeformt sein kann, und entsprechende Ausnehmungen am anderen Teil eine Formschlussverbindung zu schaffen. Der Positionierstift greift dann in die Ausnehmung ein, wenn der Adapter am Gabelende befestigt ist oder in das Gabelende eingesetzt ist.

Eine besonders handhabungssichere und ergonomische Variante besteht darin, den Griffbereich zwischen den Gabelenden gegenüber den Gabelenden selbst abzuwinkein. Vorzugsweise liegen dabei die Gabelenden in parallelen Ebenen. Durch das Abwinkeln ist es möglich, von oben kommend die Knopf-Prüfgewichte leichter von einer Unterlage oder von einer Waage abzunehmen, ohne mit der Hand einer Unterlage oder einer Waage zu nahe zu kommen.

Der Griffbereich kann mit einem weichen Kunststoff versehen sein, um die Haptik zu verbessern.

Die Vertiefungen entgegengesetzter Gabelenden können auf unterschiedlichen, entgegengesetzten Seiten der Gewichtsgabel vorgesehen sein.

Das erfindungsgemäße Handhabungswerkzeug kann einen Metallkern, insbesondere einen Aluminiumkern haben, der vollständig von einer Kunststoffschicht umgeben ist. Durch Komplettummantelung des harten Kerns wird ausgeschlossen, dass das Prüfgewicht beim versehentlichen Anschlagen der Gewichtsgabel beschädigt wird. Bereits leichte Kratzer oder dergleichen würden das Prüfgewicht untauglich machen. Natürlich ist auch eine monolithische Fertigung aus einem geeigneten Kunststoff möglich.

Die Adapter können aus demselben Kunststoff sein wie Teile der Gewichtsgabel, beispielsweise wie die Ummantelung oder der Griff.

Um die Adapter verliersicher zu machen, können sie mittels eines Scharniers mit der Gewichtsgabel verbunden sein.

Um eine möglichst hohe Spreizung der Nennweiten der Gabelenden und der Adapter zu erreichen, ist vorgesehen, dass der Adapter für den dritten Nennwert am Gabelende für den ersten Nennwert befestigbar ist und der Adapter für den vierten Nennwert am Gabelende für den zweiten Nennwert. Konkret würde das beispielsweise bei einem Gewichtssatz von 500 Gramm bis 5 Kilogramm bedeuten, dass das Gabelende für das 5-Kilogramm-Prüfgewicht (erster Nennwert) durch einen zugeordneten Adapter für das 1-Kilogramm-Prüfgewicht (dritter Nennwert) versehen werden kann, wogegen das Gabelende für das 2-Kilogramm-Prüfgewicht (zweiter Nennwert) mit einem Adapter für das 500-Gramm-Prüfgewicht (vierter Nennwert) versehen werden kann.

Natürlich beinhaltet der Begriff "Adapter" auch das Verwenden von beispielsweise zwei nicht miteinander verbundenen Leisten, die an beiden Seiten zweier Gabelzinken eines einzigen Gabelendes befestigt werden können, um die Nennweite dieses Gabelendes zu verringern.

Die Erfindung betrifft darüber hinaus einen Gewichtskasten mit einem Satz von wenigstens vier Prüfgewichten in Knopfform und einem Handhabungswerkzeug nach der Erfindung. Da erfindungsgemäß nur ein Handhabungswerkzeug notwendig ist, lässt sich dieses nunmehr in einem sehr kompakt aufgebauten Gewichtskasten unterbringen. Es müssen nicht mehr separat vom eigentlichen Gewichtskasten unterschiedliche Gewichtsgabeln aufbewahrt und transportiert werden.

Weitere Merkmale und Vorteile der Erfindung ergeben sich aus der nachfolgenden Beschreibung und aus den nachfolgenden Zeichnungen, auf die Bezug genommen wird.

In den Zeichnungen zeigen:
- Figur 1 einen erfindungsgemäßen Gewichtskasten mit einem erfindungsgemäßen Handhabungswerkzeug,
- Figur 2 eine Perspektivansicht des in Figur 1 gezeigten erfindungsgemäßen Handhabungswerkzeugs in Explosionsansicht,
- Figur 3 eine Längsschnittansicht durch das Handhabungswerkzeug von Figur 2 mit nicht eingesetzten Adaptern,
- Figur 4 eine Längsschnittansicht durch das Handhabungswerkzeug nach Figur 2 mit eingesetzten Adaptern,
- Figur 5 eine Draufsicht auf eine zweite Ausführungsform des erfindungsgemäßen Handhabungswerkzeugs mit eingesetzten Adaptern, und
- Figur 6 eine Seitenansicht des Handhabungswerkzeugs nach Figur 5 mit eingesetzten Adaptern.

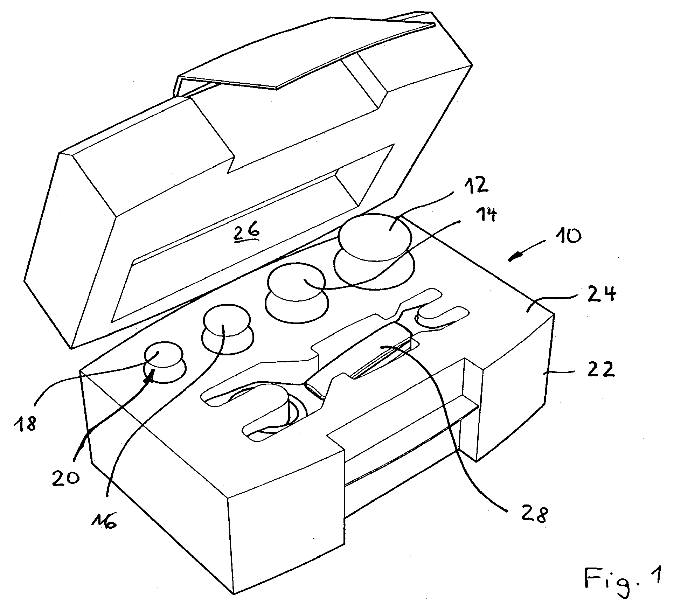

In Figur 1 ist ein Gewichtskasten 10 mit einem Satz Prüfgewichten dargestellt, die unterschiedliche Nennwerte aufweisen. Die Prüfgewichte sind Prüfgewichte in Knopfform, und zwar ein erstes Prüfgewicht 12 mit einem ersten Nennwert, hier 5 Kilogramm, ein zweites Prüfgewicht 14 mit einem zweiten Nennwert, hier 2 Kilogramm, ein drittes Prüfgewicht 16 mit einem dritten Nennwert, hier 1 Kilogramm, und ein viertes Prüfgewicht 18 mit einem vierten Nennwert, hier 500 Gramm. Die Prüfgewichte in Knopfform weisen jeweils einen zwischen Knopf und Körper liegenden, ringförmig gleichmäßig im Durchmesser verjüngten Halsabschnitt 20 auf. Der Halsabschnitt 20 ist für jedes Prüfgewicht 12 bis 18 im Durchmesser spezifisch und unterschiedlich. Zur Vereinfachung der Zeichnungen ist der Halsabschnitt 20 nur am Prüfgewicht 18 bezeichnet.

Der Gewichtskasten 10 hat ein äußeres, zweiteiliges Gehäuse 22, in welches ein das Innere des Gewichtskastens fast vollständig ausfüllendes elastisches Material 24 eingesetzt ist. In diesem Material 24 sind komplementäre Ausnehmungen zur Aufnahme der Prüfgewichte 12 bis 18 vorgesehen, sodass die Prüfgewichte nahezu spielfrei aufgenommen sind.

Der kofferartige Gewichtskasten 10 hat eine Basis, in der die Prüfgewichte in Knopfform aufgenommen sind und aus der nach oben Knopf und Halsabschnitt 20 der Prüfgewichte 12 bis 18 herausragen. Knopf und Halsabschnitte 20 werden in einer Ausnehmung 26 im elastischen Material, welches den Deckel ausfüllt, aufgenommen.

Im Gewichtskasten ist darüber hinaus auch, ebenfalls in einer formschlüssigen Ausnehmung aufgenommen, ein Handhabungswerkzeug 28 zum Handhaben der Prüfgewichte 12 bis 18 untergebracht, und zwar nur ein einziges Handhabungswerkzeug.

Dieses einzige Handhabungswerkzeug 28 reicht aus, um sämtliche Prüfgewichte 12 bis 18 handzuhaben.

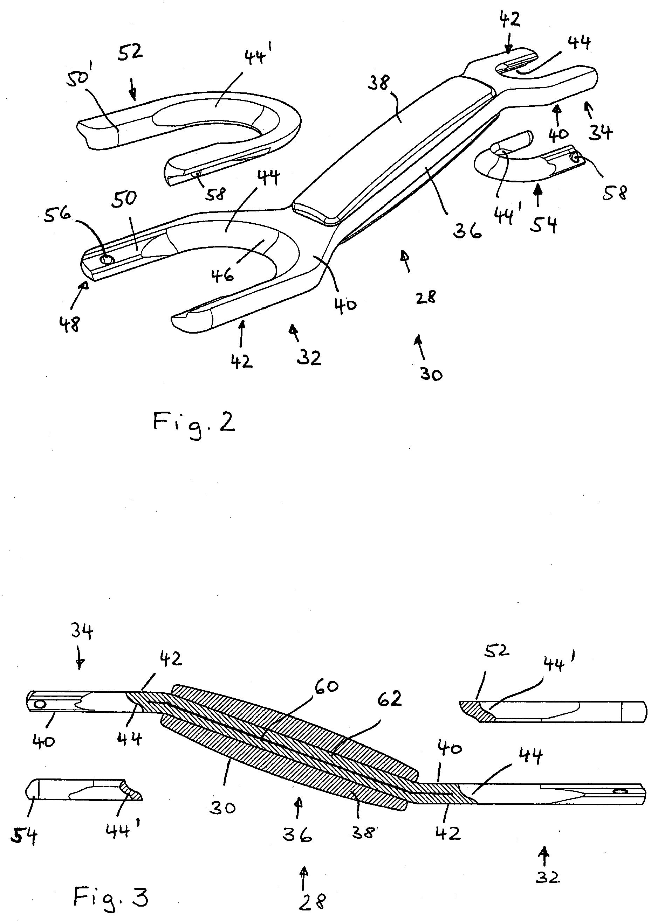

In Figur 2 ist das Handhabungswerkzeug 28 näher zu sehen. Das Handhabungswerkzeug 28 umfasst eine Gewichtsgabel 30 mit einem ersten Gabelende 32 sowie einem am entgegengesetzten Ende vorgesehenen zweiten Gabelende 34. Die Gabelenden 32, 34 werden von einem einstückig an den Gabelenden 32, 34 angebrachten Griffbereich 36 verbunden, der außenseitig zumindest abschnittsweise mit einer weichen Kunststoffauflage 38 umspritzt ist.

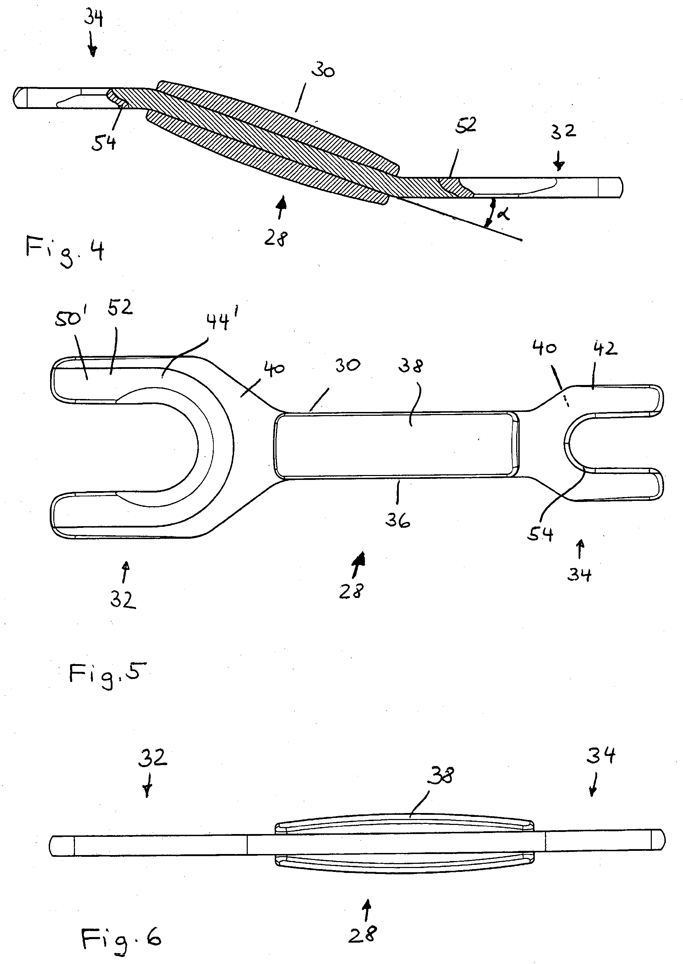

Wie in Figur 2 sowie in den Figuren 3 bis 4 gut zu erkennen ist, ist der Griffbereich 36 im Wesentlichen langgestreckt und vorzugsweise gradlinig ausgeführt, jedoch sind die Gabelenden 32, 34 zum Griffbereich 36 abgewinkelt, vorzugsweise um den Winkel α von maximal 30°, vorzugsweise maximal 20° (siehe Figur 4).

Wie man den Figuren 3 und 4 entnehmen kann, sind in einer Seitenansicht gesehen die Gabelenden 32, 34 aber in jeweils eigenen Ebenen liegend, und die Ebenen der beiden Gabelenden 32, 34 sind parallel zueinander.

Das Gabelende 32 hat, ebenso wie das Gabelende 34, eine Oberseite 40 sowie eine Unterseite 42, wobei in der Oberseite 40 jeweils im U-förmigen Gabelende 32, 34 eine tellerrandförmige Vertiefung 44 ausgeformt ist.

Die tellerrandförmige Vertiefung 44 ist vorzugsweise komplementär zur jeweiligen Knopfform des vom Gabelende aufzunehmenden Prüfgewichts ausgeführt.

Wie den Figuren gut zu entnehmen ist, hat jedes Gabelende 32, 34 eine unterschiedliche Nennweite, das heißt einen unterschiedlichen Abstand der beiden Gabelzinken. Das Gabelende 32 ist deshalb zur Aufnahme des Prüfgewichts 12 vorgesehen, weil es die größte Nennweite hat.

Das Gabelende 34, welches eine kleinere Nennweite als das Gabelende 32 hat, ist wiederum zur Aufnahme des Prüfgewichts 16 vorgesehen, und entsprechend ist auch seine Nennweite und die Form seiner Vertiefung 44 auf die Knopfform des Prüfgewichts 16 abgestimmt.

Der Begriff "Knopfform" bedeutet in diesem Zusammenhang natürlich die Unterseite des Knopfbereichs des jeweiligen Prüfgewichts 12, 16 zum Hals hin, denn die Gabelenden werden in den Halsabschnitt 20 eingeschoben, um das jeweilige Prüfgewicht 12 bis 18 aufzunehmen. Anschließend wird das Gewicht zwischen den Gabelenden hängend zur Waage transportiert und abgestellt.

Die Vertiefungen 44 sind als unterbrochener Ring ausgeführt, das heißt, sie verlaufen teilweise in die Gabelzinken hinein und darüber hinaus auch im Zwischensteg 46 zwischen benachbarten Zinken.

Die Vertiefungen 44 enden entsprechend vor den Gabelenden 48, sodass sich ausgehend vom Niveau der Vertiefungen 44 zum Gabelende hin eine Erhöhung 50 ergibt, oder, mit anderen Worten, der Knopf des Prüfgewichts liegt um mehr als 180° am Handhabungswerkzeug an, sodass der Knopf nicht mehr ohne Anheben aus dem Gabelende herausfallen kann oder natürlich nur bei extremer Schrägstellung des Gabelendes aus dieser herausgleiten kann.

Jedem Gabelende 32, 34 ist ein eigener Adapter 52 bzw. 54 zugeordnet, der nur am zugeordneten Gabelende 32 bzw. 34 befestigt werden kann, um die Nennweite des Handhabungswerkzeugs an diesem Gabelende zur Aufnahme kleinerer Prüfgewichte zu reduzieren.

Die Adapter 52, 54 sind vorzugsweise aus Kunststoffmaterial.

In der gezeigten Ausführungsform können die Adapter 52, 54 in den Zwischenraum zwischen Zinken des jeweiligen Gabelendes 32, 34 eingesetzt werden (siehe Figur 4).

Optional, dies ist nicht einschränkend zu verstehen, kann der jeweilige Adapter dann auch dieselbe Höhe haben wie die Gabelenden, sodass er in eingesetztem Zustand nicht nach oben und unten über die Gabelenden 32, 34 vorsteht (siehe Figur 4).

Bevorzugt ist die Außenform der Adapter zu der Innenform seines U-förmigen Gabelendes komplementär.

Die Adapter sind insgesamt U-förmig, sie haben ebenfalls entsprechende Vertiefungen 44', wie sie zuvor schon anhand der Vertiefungen 44 beschrieben wurden, und zwar bezüglich Form und Erstreckung.

Jeder Adapter ist über Ausnehmungen und Positionierstifte formschlüssig und spielfrei am zugeordneten Gabelende befestigbar.

Bei der gezeigten Ausführungsform haben die Zinkenenden entsprechende Vertiefungen 56, in die einstückig angeformte Positionierstifte 58 im Bereich der Unterseite des jeweiligen Adapters 52, 54 eindringen können, und zwar unter leichtem Presssitz.

Im Übrigen ist in Figur 2 auch zu sehen, dass auch hier die Vertiefungen 44' tellerrandförmig sind und vor den Adapterenden bereits enden, sodass auch hier jeweils eine Art Erhöhung 50' vorhanden ist, um ein Herausrutschen des zugeordneten Prüfgewichts zu verhindern.

Der Adapter 52 ist in seiner Nennweite darauf abgestimmt, das Prüfgewicht 16 (dritter Nennwert) aufzunehmen, wogegen der Adapter 54 zur Aufnahme des Prüfgewichts 18, welches den vierten Nennwert besitzt, ausgelegt ist.

Die Ausführung der Adapter 52, 54 ist derart gestaltet, dass keine Fehlmontage möglich ist, das heißt weder was die Auswahl des zugeordneten Gabelendes anbelangt noch die Befestigung von der entsprechenden Seite des Gabelendes aus.

Bezüglich der Ober- und Unterseite 40, 42 des Handhabungswerkzeugs an den jeweiligen Gabelenden 32, 34 ist zu bemerken, dass die Oberseite 40 für das Gabelende 32 auf der entgegengesetzten Seite des Handhabungswerkzeugs liegt wie die Oberseite 40 für das Gabelende 34. Dies ist auch gut den Figuren 3 und 4 zu entnehmen. Durch diese Vertauschung von Ober- und Unterseite ist es möglich, dass das Handhabungswerkzeug immer von oben relativ zum Prüfgewicht 12 bis 18 gehandhabt werden kann und das entsprechende, gerade benutzte Gabelende 32, 34 immer tiefer als der Griffbereich 36 liegt.

Die Gewichtsgabel 30 ist beispielsweise mit einem in Figur 3 nur symbolisch dargestellten Metallkern 60, hier aus Aluminium, versehen, der sich bis in die Gabelzinken erstreckt. Der Metallkern 60 ist vollständig von einer Kunststoffschicht 62 umgeben, sodass keine harten, scharfen Kanten mit den Prüfgewichten 12 bis 18 in Kontakt kommen könnten.

Der Kunststoff der Adapter 52, 54 ist beispielsweise derselbe wie der der Kunststoffschicht 62.

In einer alternativen, hier nicht dargestellten Ausführungsform können die Adapter 52, 54 beispielsweise über ein Scharnier mit der Gewichtsgabel verbunden sein, sodass die Adapter jeweils nur nach unten in die jeweilige Gabel hineingeklappt werden müssen.

Das Handhabungswerkzeug 28 nach der alternativen Ausführungsform gemäß den Figuren 5 und 6 entspricht im Wesentlichen dem zuvor erläuterten Handhabungswerkzeug 28, auch hier sind entsprechende Adapter an den Gabelenden 32, 34 anzubringen. Der einzige Unterschied zwischen den Ausführungsformen besteht darin, dass hier die Gabelenden 32, 34 nicht gegenüber dem Griffbereich 36 abgewinkelt sind, sondern die Gewichtsgabel 30 in einer Ebene verläuft.

## Patentansprüche

1. Handhabungswerkzeug für Prüfgewichte in Knopfform (12 bis 18), mit einer Gewichtsgabel (30) mit zwei, unterschiedliche Nennweiten aufweisenden Gabelenden (32, 34) und wenigstens zwei Adaptern (52, 54), die jeweils einem der Gabelenden (32, 34) zugeordnet sind, wobei ein Gabelende (32) zur Aufnahme eines zugeordneten Prüfgewichts in Knopfform (12) eines ersten Nennwerts und das andere Gabelende (34) zur Aufnahme eines zugeordneten Prüfgewichts in Knopfform (16) eines zweiten Nennwerts ausgebildet ist und wobei jeder Adapter (52, 54) an dem ihm zugeordneten Gabelende (32, 34) befestigbar ist, wobei die mit Adapter (52, 54) versehenen Gabelenden (32, 34) eine geringere, eigene Nennweite haben, um ein Prüfgewicht in Knopfform (14, 18) eines dritten und vierten Nennwerts aufzunehmen.

2. Handhabungswerkzeug nach Anspruch 1, **dadurch gekennzeichnet, dass** die Gabelenden (32, 34) und die Adapter (52, 54) im Wesentlichen U-förmig sind und jeweils eine tellerrandförmige Vertiefung (44, 44') aufweisen, die komplementär zu der Knopfform des zugeordneten Prüfgewichts (12 bis 18) sind.

3. Handhabungswerkzeug nach Anspruch 2, **dadurch gekennzeichnet, dass** die Vertiefungen (44, 44') entgegengesetzter Gabelenden (32, 34) auf entgegengesetzten Seiten der Gewichtsgabel (30) vorgesehen sind.

4. Handhabungswerkzeug nach Anspruch 2 oder 3, **dadurch gekennzeichnet, dass** die Vertiefungen (44, 44') jeweils als unterbrochener Ring ausgebildet sind und die Vertiefungen (44, 44') vor den freien Enden (48) der Gabelzinken enden.

5. Handhabungswerkzeug nach einem der vorhergehenden Ansprüche, **dadurch gekennzeichnet, dass** die Adapter (52, 54) durch Formschluss an den Gabelenden (32, 34) lösbar befestigbar sind.

6. Handhabungswerkzeug nach Anspruch 5, **dadurch gekennzeichnet, dass** die Adapter (52, 54) oder Gabelenden (32, 34) wenigstens einen angeformten Positionierstift (58) und entsprechend die Gabelenden und Adapter wenigstens eine Ausnehmung (56) zur Aufnahme des zugeordneten Positionierstifts (58) aufweisen, sodass der Positionierstift (58) formschlüssig in die Ausnehmung (56) eingreift, wenn der Adapter (52, 54) am Gabelende (32, 34) angebracht ist.

7. Handhabungswerkzeug nach einem der vorhergehenden Ansprüche, **dadurch gekennzeichnet, dass** ein Griffbereich (36) zwischen den Gabelenden (32, 34) vorgesehen ist, der gegenüber den Gabelenden (32, 34) abgewinkelt ist.

8. Handhabungswerkzeug nach einem der vorhergehenden Ansprüche, **dadurch gekennzeichnet, dass** ein Griffbereich (36) zwischen den Gabelenden (32, 34) mit einem weichen Kunststoff wenigstens abschnittsweise ummantelt ist.

9. Handhabungswerkzeug nach einem der vorhergehenden Ansprüche, **dadurch gekennzeichnet, dass** die Gewichtsgabel (30) einen Metallkern (60) aufweist, der vollständig von einer Kunststoffschicht (62) umgeben ist.

10. Handhabungswerkzeug nach einem der vorhergehenden Ansprüche, **dadurch gekennzeichnet, dass** die Adapter (52, 54) und zumindest Teile der Gewichtsgabel (30) aus dem gleichen Kunststoff sind.

11. Handhabungswerkzeug nach einem der vorhergehenden Ansprüche, **dadurch gekennzeichnet, dass** der Adapter (52) für den dritten Nennwert und das drittschwerste Prüfgewicht dem Gabelende (32) für den ersten Nennwert und das schwerste Prüfgewicht zugeordnet ist und der Adapter (54) für den vierten Nennwert und das viertschwerste Prüfgewicht dem Gabelende (34) für den zweiten Nennwert und das zweitschwerste Prüfgewicht zugeordnet ist.

12. Handhabungswerkzeug nach einem der vorhergehenden Ansprüche, **dadurch gekennzeichnet, dass** die Adapter (52, 54) mit den Gabelenden (32, 34) über Scharniere klappbar verbunden sind.

13. Gewichtskasten mit einem Satz Prüfgewichte (12 bis 18) und einem Handhabungswerkzeug (28) nach einem der vorgehenden Ansprüche.

## Claims

1. Handling tool for test weights in button form (12 to 18), with a weight fork (30) with two fork ends (32, 34) having different nominal weights and at least two adapters (52, 54) each associated with a respective one of the fork ends (32, 34), wherein one fork end (32) is constructed for receiving an associated test weight in button form (12) of a first nominal value and the other fork end (34) for reception of an associated test weight in button form (16) of a second nominal value and wherein each adapter (52, 54) is fastenable to the fork end (32, 34) associated therewith, wherein the fork ends (32, 34) provided with adapters (52, 54) have a lower individual nominal weight so as to receive a test weight in button form (14, 18) of a third and fourth nominal value.

2. Handling tool according to claim 1, **characterised in that** the fork ends (32, 34) and the adapters (52, 54) are substantially U-shaped and each have a depression (44, 44') which is of plate-rim shape, and the depressions being complementary to the button shape of the associated test weight (12 to 18).

3. Handling tool according to claim 2, **characterised in that** the depressions (44, 44') of opposite fork ends (32, 34) are provided on opposite sides of the weight fork (30).

4. Handling tool according to claim 2 or 3, **characterised in that** the depressions (44, 44') are each constructed as an interrupted ring and the depressions (44, 44') end ahead of the free ends (48) of the fork prongs.

5. Handling tool according to any one of the preceding claims, **characterised in that** the adapters (52, 54) are detachably fastenable to the fork ends (32, 34) by shape-locking couple.

6. Handling tool according to claim 5, **characterised in that** the adapters (52, 54) or fork ends (32, 34) have at least one integrally formed positioning pin (58) and in correspondence with the fork ends and adapters at least one recess (56) for reception of the associated positioning pin (58) so that the positioning pin (58) mechanically positively engages in the recess (56) when the adapter (52, 54) is mounted on the fork end (32, 34).

7. Handling tool according to any one of the preceding claims, **characterised in that** a grip region (36) is provided between the fork ends (32, 34) and is angled relative to the fork ends (32, 34).

8. Handling tool according to any one of the preceding claims, **characterised in that** a grip region (36) between the fork ends (32, 34) is encased at least in a section by a soft synthetic material.

9. Handling tool according to any one of the preceding claims, **characterised in that** the weight fork (30) has a metal core (60) which is completely surrounded by a synthetic material layer (62).

10. Handling tool according to any one of the preceding claims, **characterised in that** the adapters (52, 54) and at least parts of the weight fork (30) are made of the same synthetic material.

11. Handling tool according to any one of the preceding claims, **characterised in that** the adapter (52) for the third nominal value and the third-heaviest test weight is associated with the fork end (32) for the first nominal value and the heaviest test weight and the adapter (54) for the fourth nominal value and the fourth-heaviest test weight is associated with the fork end (34) for the second nominal value and the second-heaviest test weight.

12. Handling tool according to any one of the preceding claims, **characterised in that** the adapter (2, 54) is pivotably connected with the fork ends (32, 34) by way of hinges.

13. Weight box with a set of test weights (12 to 18) and a handling tool (28) according to any one of the preceding claims.

## Revendications

1. Outil de manipulation pour poids de contrôle en forme de boutons (12 à 18), comportant une fourche à poids (30) avec deux extrémités de fourche (32, 34) d'ouverture nominale différente et au moins deux adaptateurs (52, 54) associés chacun à une des extrémités de fourche (32, 34), où une extrémité de fourche (32) est prévue pour la réception d'un poids de contrôle en forme de bouton (12) correspondant d'une première valeur nominale et l'autre extrémité de fourche (34) pour la réception d'un poids de contrôle en forme de bouton (16) correspondant d'une deuxième valeur nominale, et où chaque adaptateur (52, 54) peut être fixé sur l'extrémité de fourche (32, 34) qui lui est associée, les extrémités de fourche (32, 34) pourvues d'adaptateurs (52, 54) ayant une ouverture nominale inférieure propre pour recevoir un poids de contrôle en forme de bouton (14, 18) d'une troisième et d'une quatrième valeur nominale.

2. Outil de manipulation selon la revendication 1, **caractérisé en ce que** les extrémités de fourche (32, 34) et les adaptateurs (52, 54) sont sensiblement en forme de U et présentent des évidements (44, 44') respectifs en bord d'assiette, complémentaires à la forme de bouton des poids de contrôle (12 à 18) correspondants.

3. Outil de manipulation selon la revendication 2, **caractérisé en ce que** les évidements (44, 44') d'extrémités de fourche (32, 34) opposées sont prévus sur des faces opposées de la fourche à poids (30).

4. Outil de manipulation selon la revendication 2 ou 3, **caractérisé en ce que** chaque évidement {44, 44') est formé comme anneau interrompu et **en ce que** les évidements (44, 44') se terminent avant les extrémités libres (48) des fourches.

5. Outil de manipulation selon l'une des revendications précédentes, **caractérisé en ce que** les adaptateurs (52, 54) peuvent être fixés de manière amovible par engagement positif sur les extrémités de fourche (32, 34).

6. Outil de manipulation selon la revendication 5, **caractérisé en ce que** les adaptateurs (52, 54) ou les extrémités de fourche (32, 34) comportent au moins un tenon de positionnement (58) formé et **en ce que** les extrémités de fourche et les adaptateurs présentent en conséquence au moins un logement (56) pour la réception des tenons de positionnement (58) correspondants, si bien que le tenon de positionnement (58) s'engage par correspondance de forme dans le logement (56) quand l'adaptateur (52, 54) est appliqué contre l'extrémité de fourche (32, 34).

7. Outil de manipulation selon l'une des revendications précédentes, **caractérisé en ce qu'**une zone de saisie (36) est prévue entre les extrémités de fourche (32, 34), laquelle est oblique par rapport aux extrémités de fourche {32, 34).

8. Outil de manipulation selon l'une des revendications précédentes, **caractérisé en ce qu'**une zone de saisie {36) entre les extrémités de fourche (32, 34) est enrobée au moins en partie d'une matière plastique souple.

9. Outil de manipulation selon l'une des revendications précédentes, **caractérisé en ce que** la fourche à poids (30) a une âme métallique (60) entièrement entourée d'une couche de matière plastique (62).

10. Outil de manipulation selon l'une des revendications précédentes, **caractérisé en ce que** les adaptateurs (52, 54) et au moins des parties de la fourche à poids (30) sont constitués de la même matière plastique.

11. Outil de manipulation selon l'une des revendications précédentes, **caractérisé en ce que** l'adaptateur (52) pour la troisième valeur nominale et le troisième poids de contrôle le plus lourd sont associés à l'extrémité de fourche (32) pour la première valeur nominale et le poids de contrôle le plus lourd, et **en ce que** l'adaptateur (54) pour la quatrième valeur nominale et le quatrième poids de contrôle le plus lourd sont associés à l'extrémité de fourche (34) pour la deuxième valeur nominale et le deuxième poids de contrôle le plus lourd.

12. Outil de manipulation selon l'une des revendications précédentes, **caractérisé en ce que** les adaptateurs (52, 54) sont raccordés de manière rabattante aux extrémités de fourche (32, 34) par des charnières.

13. Coffret à poids avec un jeu de poids de contrôle (12 à 18) et un outil de manipulation (28) selon l'une des revendications précédentes.
